# EUROPEAN PATENT APPLICATION

(11) **EP 2 953 371 A1**
(43) Date of publication of application: **09.12.2015**
(21) Application number: 14305851.9
(22) Date of filing: 05.06.2014
(51) Int. Cl.: H04N 21/422, H04N 21/4223, H04N 21/4415, H04N 21/84, H04N 21/441, H04N 21/442

(54) **Distinction of users of a television receiver**

(71) Applicant: Thomson Licensing, 92130 Issy-les-Moulineaux (FR)
(72) Inventor: Van Der Linden, Pieter, 92443 Issy-les-Moulineaux cedex (FR); Bonjour, Xavier, 92443 Issy-les-Moulineaux cedex (FR); Fawaz, Nadia, Santa Clara, CA California 95050 (US)
(74) Representative: Browaeys, Jean-Philippe

(57) **Abstract**

Method of distinction of users of a television receiver, comprising:
monitoring (20), during a period of time, content viewed on the television receiver and classifying (22) said content into different content types;
monitoring (20), during the same period of time, biometric features of users of the television receiver and classifying (24) said biometric features into different biometric profiles;
associating (26) each biometric profile with at least one type of viewed content on the basis of said monitoring; and
characterizing (28) each user by at least one couple of associated content type and biometric profile.

## Description

### FIELD OF THE INVENTION

The present invention generally relates to the field of television.

More particularly, the invention deals with the distinction between different users of a television receiver, for instance in order to offer to each of the users personalized programs relevant for said user.

Thus, the invention concerns a method of distinction of users of a television receiver. It also concerns a corresponding distinction device and a computer program implementing the method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

The wide range of existing television channels and associated interactive services allows to cover a very large audience. Consequently, users often have difficulties to choose the relevant television programs which provide the most interesting content for them. Thus, there is a need for a personalization of the television services provided to users.

Unfortunately, this personalization is frequently based on terminal identification rather than on the viewer himself. Since a television display is often used by multiple viewers with heterogeneous profiles, this type of personalization cannot fit to each viewer's preferences.

Some solutions exist to identify a television viewer. These solutions comprise, for instance, the use of a smart card with a dedicated optical /electrical interface or a fingerprint reader or a personal pin code or a voice or face recognition mechanism or an identification with a sensor such as a bracelet. Other solutions use a smartphone with a Bluetooth interface or a RFID (Radio Frequency IDentification) reader. All these existing solutions require an action from the user and can consequently be perceived by said user as a constraint.

There are also some solutions that infer the identity of a user from his behavior in a particular domain. For instance, a method of viewer identification has been proposed using viewing pattern discovery, for example by analyzing preferred channels and/or viewing habits, such as channel surfing. According to this solution, a viewer profile identification system, which may be installed in the headend of a television system, provides a viewing system that analyzes the content and the user actions to identify the viewer or at least some characteristics of the viewer.

This identification method based on the channel selection and zapping pattern is however often insufficient to identify a television viewer either because the current viewer does not have an easily identifiable behavior when selecting television channels, or because the watched program does not match with a unique non ambiguous user profile. Consequently, this type of solution lacks rapidity, reliability and accuracy.

### SUMMARY OF THE INVENTION

The present invention proposes a solution for improving the situation.

Accordingly, the present invention provides a method of distinction of users of a television receiver, comprising:
monitoring, during a period of time, content viewed on the television receiver and classifying said content into different content types;
monitoring, during the same period of time, biometric features of users of the television receiver and classifying said biometric features into different biometric profiles;
associating each biometric profile with at least one type of viewed content on the basis of said monitoring; and
characterizing each user by at least one couple of associated content type and biometric profile.

Thus, the method of the present invention takes into account both the viewing history and the biometric information in order to distinguish between the users of the receiver device. The characterization of each user by at least one couple of viewed content type and biometric profile is used to enable a simple, anonymous and efficient identification of the user who is currently watching the TV. It is then possible to provide immediately to the user a more efficient content recommendation or to personalize a user interface or to target an advertising provided to said user.

Advantageously, the biometric features are monitored using a motion sensing remote control.

For instance, these biometric features characterize the manner with which a user holds and/or moves the remote control of the television receiver.

Alternatively or simultaneously, the biometric features are monitored using a camera and/or a microphone.

In this case, the biometric profile of the user is based on his face and/or his voice features.

According to an embodiment, the method further comprises monitoring external information.

Advantageously, the external information comprise information provided by an external source of information, for example from a social network or a television guide or a movie database.

These information concern, for instance, television programs broadcasted on a television channel being currently viewed.

Advantageously, the classifications of the content and of the biometric features use subspace clustering.

Examples of subspace clustering algorithms are provided, for instance, in the document WO2013/190379.

Advantageously, the method comprises storing the couples characterizing the users of the television receiver in a database.

Advantageously, the television receiver is a set-top box or a connected TV.

One or more television displays are advantageously connected to said set-top box, for example in a home.

The invention also provides a method of recommendation of content to a user from a plurality of users of a television receiver, comprising:
detection of a biometric profile of the user;
identifying, for the detected biometric profile, at least one associated content type in the database;
recommending content of the at least one identified type to the user.

The invention further provides a device for distinguishing users of a television receiver, comprising:
a history module operable to monitor, during a period of time, content viewed on the television receiver and to classify said content into different content types;
a biometric module operable to monitor, during the same period of time, biometric features of users of the television receiver and to classify said biometric features into different biometric profiles;
an association module operable to associate each biometric profile with at least one type of viewed content on the basis of said monitoring; and
a characterizing module operable to characterize each user by at least one couple of associated content type and biometric profile.

According to an embodiment, the device is a gateway or a set-top box.

According to another embodiment, the device is a remote server.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

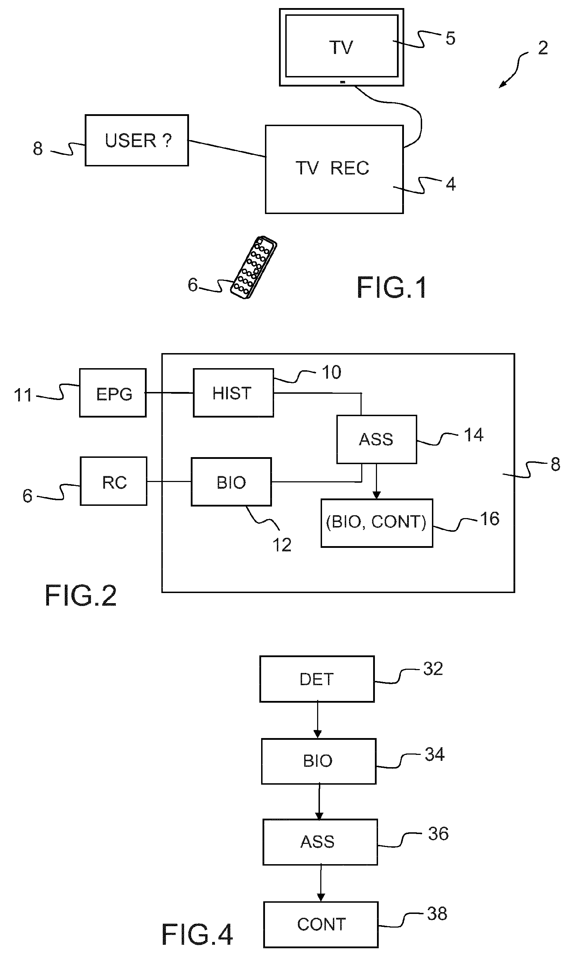

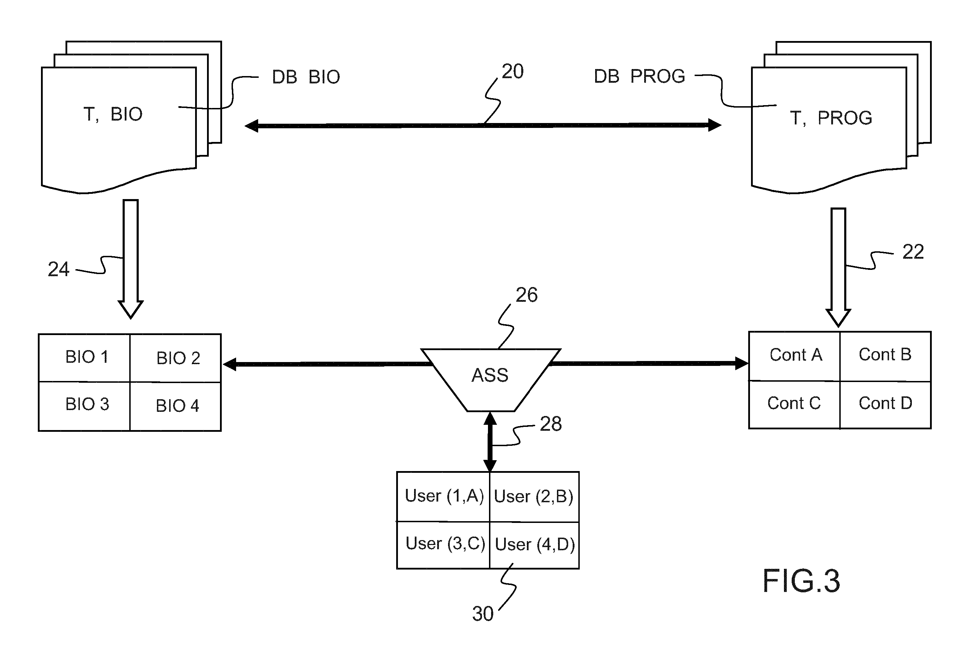

The invention thus provides computer-readable programs comprising computer-executable instructions to enable a computer to perform the distinction and recommendation methods of the invention. The diagrams of figures 3 and 4 illustrate examples of the general algorithms for such computer programs.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 represents an example of a television system implementing an embodiment of the invention;
- Figure 2 represents a device able to distinguish users of the television system, according to an embodiment of the invention;
- Figure 3 is a flowchart detailing the steps of the method of distinction of users according to an embodiment of the present invention; and
- Figure 4 is a flowchart detailing the steps of the method of recommendation according to an embodiment of the present invention.

### DETAILED DESCRIPTION OF PREFERRED EMBODIMENTS

Referring to Figure 1, there is shown therein a television system 2 implementing an embodiment of the invention.

In the following description, a home scenario is considered wherein users, for instance family members, access to television content using a same television receiver 4, typically a set-top box. A television set 5 is connected to the television receiver 4.

Advantageously, several television sets may be connected to the television receiver 4.

In the following description, the user, or group of users, that is currently watching the television on the television set 5, is called television viewer.

According to the illustrated embodiment, the television viewer interacts with the television receiver 4 using a remote control 6.

Preferably, the remote control 6 comprises a motion sensor, for instance an accelerometer, able to detect accurately the manner with which the television viewer holds and shakes said remote control 6.

Furthermore, according to an embodiment of the invention, the television system 2 also comprises a distinction device 8 able to distinguish the users of the television receiver 4. According to an embodiment, the distinction device 8 is located in the home. It may for instance be implemented in the television receiver 4 itself. It may also be attached or connected to said television receiver 4 through a wired or a wireless communication link. For instance, the distinction device 8 may be a gateway.

Alternatively, the distinction device 8 is located outside the home. It may be for instance implemented in a remote server of the television service provider.

The structure of the distinction device 8 is further detailed with reference to Figure 2.

The distinction device 8 comprises a history module 10 able to monitor, during a period of time, content viewed on the television receiver 4. In order to perform this monitoring, the history module 10 has access to a television guide 11, for instance an Electronic Program Guide (EPG).

The history module 10 is also able to classify said content into different content types. For instance, these content types may include sporting events, action films, romantic comedies, children's programs, etc. The television guide 11 may be used to assist the history module 10 for this classification.

The distinction device 8 also includes a biometric module 12 able to monitor, during the same period of time, biometric features of the television viewers.

According to the represented embodiment, these biometric features characterize the manner with which the television viewer moves the remote control 6. In this case the biometric module 12 is advantageously connected to the motion sensor within the remote control 6.

The biometric module 12 is also able to classify the monitored biometric features into different biometric profiles representing the way each person wields the remote control. For instance, these biometric profiles may include "hesitating", "rapid", etc.

As shown in the paper from Chang et al. "Inferring identity using accelerometers in television remote controls", Proceedings of 7th International Conference of Pervasive Computing, pages 151-167, Japan, May 2009, the biometric profiles of separate users, representing the hand motion pattern when using the remote control 6, are easily distinguishable by looking at acceleration features before, during and after each button press. Features before the press roughly capture the hand motion when the remote control was picked up or held between surf actions, features during the press capture distinctiveness in the orientation of the remote control as well as the dynamics of actually pressing the buttons and features after the press capture how the remote control falls back to the arm, couch, lap, or table.

Furthermore, the distinction device 8 comprises an association module 14 able to associate each biometric profile with at least one type of viewed content on the basis of the monitoring and classification made by the history module 10 and the biometric module 12. For instance, if during the same time interval, the history module 10 indicates that a sports event was viewed and the biometric module 12 indicates that the biometric profile is "assured", the type of content "sports" is associated with the biometric profile "assured".

The distinction device 8 further comprises a characterizing module 16 able to characterize each user by at least one couple of associated content type and biometric profile. Thus, for example, one user in the home will be characterized by the couples (sports, assured) and (action films, assured).

The flowchart of Figure 3 details the steps of the distinction method according to an embodiment of the present invention.

During a first step 20, the content viewed on the television receiver 4 and biometric features of users of the television receiver 4 are monitored by the history module 10 and the biometric module 12, respectively, during a chosen time period, for instance a week. However shorter or longer time periods may be chosen by the users for this monitoring.

The monitoring may also be done all the time, if the composition of the users changes frequently.

Advantageously, the time period is split into time intervals with a constant or a variable length. Advantageously, each time interval corresponds to the duration of a different program viewed on the television receiver 4.

According to the represented embodiment, each time interval and the corresponding viewed program are stored in a program history database; and each time interval and the corresponding biometric features sensed by the remote control 6 are stored in a biometric history database.

At step 22, the history module 10 classifies the different programs stored within the program history database into different content types. For this classification, the history module 10 advantageously uses a subspace clustering technique.

At step 24, the biometric module 12 classifies the biometric features of users of the television receiver into different biometric profiles. For this classification, the biometric module 12 advantageously uses a subspace clustering technique.

At step 26, the association module 14 associates each type of viewed content with a biometric profile on the basis of said monitoring. This association is performed by using the time information stored in the program and biometric history databases.

At step 28, the characterizing module 16 determines couples of associated content types and biometric profiles and stores these couples in a database 30. The database 30 may be located in the distinction device 8 or in any other location inside or outside the home.

At the level of the television system 2, the couples stored in the database 30 relate to separate users and are advantageously used to provide suitable content recommendations to the users in an anonymous and seamless manner for said users.

Of course, a plurality of couples stored in the database 30 may relate to only one user.

Also, one or more couples stored in the database 30 may relate to a group of users watching the television together, the remote control being hold by one of the users of the group, for instance a group comprising an adult and a child, the adult holding the remote control.

The flowchart of Figure 4 details the steps of the recommendation method according to an embodiment of the present invention.

At step 32, the remote control 6 detects the biometric features of the television viewer. Then, it transmits these biometric features to the biometric module 12 which determines, at step 34, the biometric profile of the user.

Then, at step 36, the association module 14 identifies at least one content type associated to the determined biometric profile in the database 30.

At step 38, the history module 10 checks, using the television guide 11, if there are currently programs proposed having the identified content type(s). The history module 10 may also advantageously check the ratings of said programs provided by other sources of information, for instance social networks or news servers. The history module 10 may also check the ratings given by the user to similar programs, said ratings having been collected by the history module 10 previously during the monitoring step 20.

Then, the history module 10 recommends to the television viewer a suitable content having the identified type.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

Indeed, although the description above considered biometric features characterizing the manner with which a user moves the remote control of the television receiver, other biometric features may be used separately or simultaneously such as face and voice features of the user.

## Claims

1. Method of distinction of users of a television receiver (4), comprising:
monitoring (20), during a period of time, content viewed on the television receiver (4) and classifying (22) said content into different content types;
monitoring (20), during the same period of time, biometric features of users of the television receiver (4) and classifying (24) said biometric features into different biometric profiles;
associating (26) each biometric profile with at least one type of viewed content on the basis of said monitoring; and
characterizing (28) each user by at least one couple of associated content type and biometric profile.

2. Method of claim 1, wherein the biometric features are monitored using a motion sensing remote control (6).

3. Method of claim 1 or 2, wherein the biometric features are monitored using a camera and/or a microphone.

4. Method of any of claims 1 to 3, further comprising monitoring external information.

5. Method of any of claims 1 to 4, wherein the classifications of the content and of the biometric features use subspace clustering.

6. Method of any of claims 1 to 5, comprising storing (28) the couples characterizing the users of the television receiver (4) in a database (30).

7. Method of any of claims 1 to 6, wherein the television receiver (4) is a set-top box or a connected TV.

8. Method of recommendation of content to a user from a plurality of users of a television receiver (4), comprising:
determination (32, 34) of a biometric profile of the user;
identifying (36), for the detected biometric profile, at least one associated content type in a database (30) in which are stored couples of associated biometric profiles and content types characterizing the users of the television receiver (4);
recommending (38) content of the at least one identified type to the user.

9. Device (8) for distinguishing between users of a television receiver (4), comprising:
a history module (10) operable to monitor, during a period of time, content viewed on the television receiver (4) and to classify said content into different content types;
a biometric module (12) operable to monitor, during the same period of time, biometric features of users of the television receiver (4) and to classify said biometric features into different biometric profiles;
an association module (14) operable to associate each biometric profile with at least one type of viewed content on the basis of said monitoring; and
a characterizing module (16) operable to characterize each user by at least one couple of associated content type and biometric profile.

10. Device of claim 9, said device (8) being a gateway or a set-top box.

11. Device of claim 9, said device (8) being a remote server.

12. Computer-readable program comprising computer-executable instructions to enable a computer to perform the distinction method of any of claims 1 to 7.

13. Computer-readable program comprising computer-executable instructions to enable a computer to perform the recommendation method of claim 8.
